# EUROPEAN PATENT SPECIFICATION

(11) **EP 2 331 830 B1**
(45) Date of publication and mention of the grant of the patent: **30.09.2015**
(21) Application number: 09740264.8
(22) Date of filing: 30.09.2009
(51) Int. Cl.: F16B 5/02

(54) **FASTENING DEVICE**
BEFESTIGUNGSVORRICHTUNG
DISPOSITIF DE FIXATION

(30) Priority: 30.09.2008 DE 102008049640; 31.12.2008 WO PCT/EP2008/011157
(43) Date of publication of application: 15.06.2011
(73) Proprietor: Flückiger, Werner, 5727 Oberkulm (CH)
(72) Inventor: Flückiger, Werner, 5727 Oberkulm (CH)
(74) Representative: Manitz, Finsterwald & Partner GbR
(86) International application number: PCT/EP2009/007024
(87) International publication number: WO 2010/037535

(56) References cited:
- EP-A1- 0 476 466
- EP-A1- 1 184 577
- US-A- 4 486 134

## Description

The invention relates to a fastening device for anchorage in massive bases or materials, e.g. concrete, brick, steel or the like, in accordance with the preamble of claim 1.

Such a fastening device is known from EP-A-0 476 466. In the known embodiment, the sleeve can be mounted onto the shaft part from the free shaft end and is held on the shaft part by means of a collar on the shaft at the one end and by means of a beaded over section of the shaft at the other hand. This type of fixation of the sleeve on the shaft part by means of beading over the free shaft end in a cold process requires a certain steel alloy, which cannot be hardened. The known screw can thus not have a hardened thread with a cutting function and can thus not be used for a direct installation in hard materials, such as concrete, brick and metal.

The invention is intended to provide a solution for this problem. The invention is based on the object of providing a fastening device, which can be screwed directly into concrete, brick, steel or the like.

In order to solve this problem there is provided a fastening device of the initially named kind which is characterized in that the screw is formed using a screw blank made of steel, which can be hardened; in that at least two first precutting edges are provided at the support section adjacent the thread part and designed to cut a hole in an attachment part, said hole having a diameter generally corresponding to that of the core diameter of the external thread of the sleeve.

Further developments and/or advantageous embodiments of the fastening device are the subject of the further claims 2 to 4 and a method of manufacturing a fastening device is the subject of claims 5.

For the sake of completeness reference should also be made to EP-A-1 184 577 which discloses a fastening device having a screw and a sleeve. In the Fig. 6 embodiment cutting edges are provided at the front conical end of the sleeve remote from the head of the screw.

The invention will be explained in the following with reference to the accompanying drawings, in which:
- Fig. 1: shows a longitudinal section of a first embodiment of the fastening device;
- Fig. 2: shows a longitudinal section of a second embodiment of the fastening device;
- Fig. 3: shows a longitudinal section of a third embodiment of the fastening device;
- Fig. 4: a diagram similar to Fig. 1 but showing an alternative design of the pre-cutting edges anf
- Fig. 5: a diagram similar to Fig. 2 but showing an alternative design of the precutting edges,

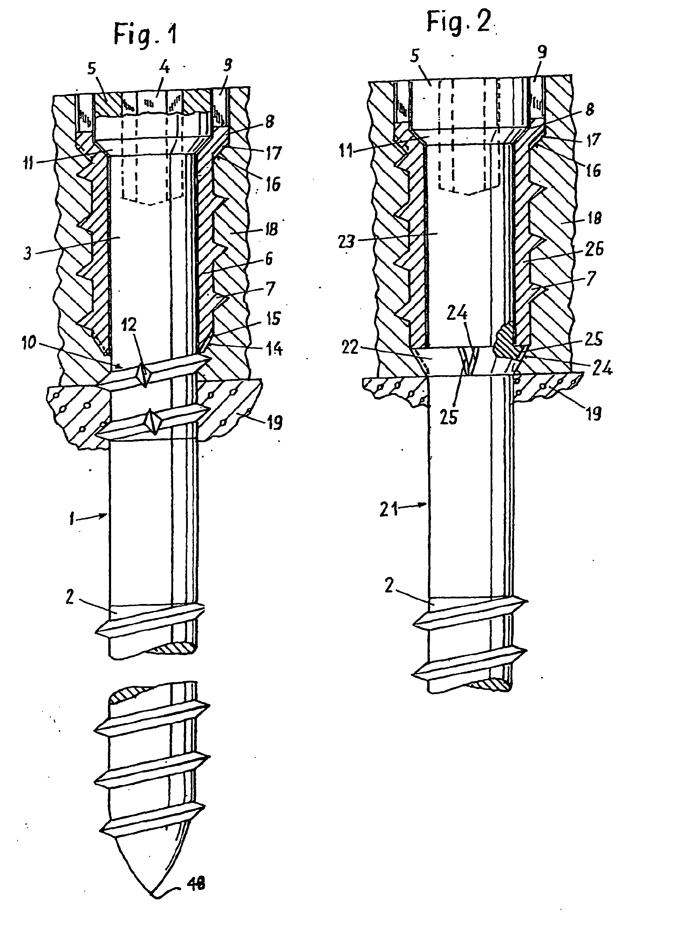

The embodiment illustrated in Figure 1 consists of a screw 1 having a thread part 2 and a shaft part 3, which has a recess 4 at the free end for inserting a non-illustrated tool and also has a sleeve 6, which is arranged on the shaft part. As illustrated, the recess 4 can be formed as an internal hexagon or as torx recess or cross-shaped slot.

The sleeve 6 has an external thread 7, the pitch of which is the same as that of the thread part 2 of the screw 1 and has at one end a radially enlarged rim portion 8 provided with slots 9, for engagement by a non-illustrated second tool. According to the illustration, the rim portion 8 can have a diameter, which substantially corresponds to the diameter of the external thread 7 of the sleeve 6.

The screw 1 is made of steel, which can be hardened and is formed by a rod-shaped cylindrical screw blank, the diameter of which substantially corresponds to the core diameter of the thread, which is to be generated at the thread part 2 and which is designed with a radially enlarged head section 5 formed at the free end of the shaft part 3 remote from the tip 48 of the screw 1. A conical support surface 11 for the sleeve 6 is formed at the head section 5. The sleeve 6 can be mounted onto the shaft part 3 over the still unprocessed thread part 2 from the other end of the screw blank. The rim portion 8 of the sleeve is designed with a conical step, which receives the head section 5 of the shaft part and which can be placed onto the support surface 11. The sleeve 6 can be made of steel, which cannot be hardened, or is not intended to be hardened, as is assumed in the illustrated example.

The shaft part 3 is designed with a support section 10, which can be generated by means of deforming the screw blank and which is enlarged towards the end of the mounted sleeve 6 adjacent the thread part 2 so as to hold the sleeve 6 on the shaft part 3. In accordance with the illustration, the support section 10 is formed by means of at least one thread turn generated at the screw blank. At least two scraper grooves 12, which are associated with the sleeve 6, can be provided at the thread turn. In the illustrated example, three scraper grooves 12, which are offset from one another in the peripheral direction, are present.

At the end of the sleeve 6, which is located opposite the rim portion 8 at least two first precutting edges 14, in the illustrated example four precutting edges 14 are provided, which are directed towards the support section 10 and which are each formed at a cut-out 15. More specifically, the first precutting edges 14 lie on the surface of a cone in axial planes containing the longitudinal axis of the screw 1. Alternatively they could be generally helically disposed on or skewed relative to the surface of said cone.

The sleeve 6 is furthermore provided with at least two second precutting edges 16, in the illustrated example four precutting edges 16, which face the external thread 7 and each of which is formed at a cut-out 17 on the conical wall section of the rim portion 8. The second precutting edges 16 are designed to cut a hole in the attachment part 18 to receive the enlarged rim portion of the sleeve 6. The hole has a diameter generally corresponding to that of the enlarged core diameter of the sleeve 6. The second precutting edges 16 preferably lie on the surface of a cone in axial planes containing the longitudinal axis of the screw 1 or are, alternatively, generally helically disposed on or skewed relative to the surface of said cone.

When such a helical or skewed position is selected the front or leading ends of the first or second precutting edges, i.e. the ends nearest the tip of the thread part 2, are preferably advanced in the direction of the thread, when moving along the thread to the tip 48 of the screw, relative to the rear or trailing ends, i.e. the ends closest to the end of the fastening device engaged by the first or second tool. This preferred orientation applies to all precutting or cutting edges in all embodiments of the fastening device. The support section 10 of the shaft part 3 equipped with the sleeve 6 and the thread of the thread part 2 can be generated at the screw blank in each case in a separate rolling process or, as assumed in the illustrated embodiment, in a common rolling process. In a subsequent operation, the screw 1 produced in such a manner and equipped with the sleeve 6 is hardened. In a further operation, the screw 1 can be provided with a galvanic coating as corrosion protection at least in the region of the thread part 2 and, if required, in the region of the support part 10.

As is illustrated in Figure 1, the sleeve 6 is rotatably held on the shaft part 3, on the one hand by means of the support surface 11 of the shaft part 3 and, on the other hand by means of the support section 10 and is held in the axial direction in such a manner that the screw 1 and the sleeve 6 can be rotated together or individually by means of the two associated tools.

The described fastening device has the purpose of being screwed directly, i.e. without the use of a dowel, into concrete, brick, steel or the like. The illustrated embodiment serves the purpose of fastening a partially illustrated attachment part 18, which is made of wood, to a support part 19, which is made of concrete and which is also illustrated partially. The screw 1, which is equipped with the sleeve 6, is screwed in this arrangement into a bore, which is introduced into the support part 19 through the attachment part 18. The diameter of the bore corresponds to the core diameter of the thread part 2. When the support section 10 of the shaft part 3 strikes against the outside of the attachment part 18, the section of the hole penetrating the attachment part 18 is enlarged in response to the joint further rotation of the screw 1 and of the sleeve 6 by means of the scraper grooves 12 formed at the support section 10 and by means of the first precutting edges 14 formed at the end of the sleeve 6, in each case to a diameter, which corresponds to the core diameter of the external thread 7 of the sleeve 6 and which thus makes it possible to screw the sleeve 6 into the attachment part 18 in an easier manner. When the rim portion 8 of the sleeve 6 strikes against, the outside of the attachment part 18, the bore formed by means of the first precutting edges 14 is enlarged in response to the further rotation of the screw 1 and of the sleeve 6 by means of the second cutting edges 16 formed at the sleeve 6, in each case to a diameter, which corresponds to the diameter of the rim portion 8 and which thus makes it possible to mount the fastening device so as to be flush with the outside of the attachment part 18.

Generally speaking a preferred method of manufacturing the fastening device of Fig. 1, which can also be used to manufacture the fastening device of Fig. 2, is as follows:
A generally rod-shaped blank is used for a screw such as is shown in Fig. 1 (or Fig. 2) which has a thread part 2 and a shaft part 3 and is made of a hardenable material, preferably of a material hardenable to a level permitting direct thread forming action in at least one of prebored concrete, pre-bored brick and pre-bored steel. A head portion 5 including a tool receiving feature 4 is formed at the end of the shaft portion remote from the end of the screw blank which will later correspond to the tip of the thread part. The head portion is enlarged relative to the core diameter of said thread part 2. The pre-manufactured threaded sleeve 6 is subsequently placed over said the shaft part from the tip end of said blank, i.e. the end corresponding to the tip of the subsequent thread of said thread part 2. Thereafter a sleeve retaining portion 10 is subsequently formed on the screw part adjacent said front end of said sleeve, i.e. the end of the sleeve adjacent the aforementioned tip. The thread is subsequently or simultaneously formed on the thread part 2 and the screw 1 is then hardened.

In the further figures of the drawings, corresponding parts are provided, where appropriate, i.e. where the parts remain essentially unchanged, with the same reference numerals as used in the earlier figures and the same description will be understood to apply, unless something is stated to the contrary.

The embodiment illustrated in Figure 2 differs from the embodiment according to Fig. 1 by a screw 21 having a modified shaft part 23 and by a modified sleeve 26. The shaft part 23 is designed with a support section 22, which can be created by means of deforming the screw blank and which is conically enlarged towards the end of a mounted sleeve 26 opposite the rim portion 8. The support section 22 extends substantially towards the core diameter of the external thread 7 of the sleeve 26 so as to hold the sleeve 26 on the shaft part 23. On the shaft part 23 there are provided at least two first precutting edges 24, according to the illustration four precutting edges 24, which are associated with the sleeve 26, which are adjacent the thread part 2 and which in each case are formed at a cut-out 25 of the support section 22.

The support section 22 of the shaft part 23 equipped with the sleeve 26 and the thread of the thread part 2 can be generated at the screw blank in each case in a separate rolling process or, as provided in the illustrated embodiment, in a common rolling process. In a subsequent operation, the screw 21 with the mounted sleeve 26 produced in such a manner is hardened. In a further operation, the screw 21 can be provided with a galvanic coating as corrosion protection at least in the region of the thread part 2 and, if required, of the support section 22.

When the support section 22 of the shaft part 23 strikes against the outside of the attachment part 18, when the screw 21 is screwed into the hole provided in the attachment part 18 and in the support part 19, the section of the hole which penetrates the attachment part 18 is enlarged in response to a joint further rotation of the screw 21 and of the sleeve 26 by means of the first cutting edges 24 formed on the support section 22 in each case to a diameter, which corresponds to the core diameter of the external thread 7 of the sleeve 26 and which thus makes it possible to screw the sleeve 26 into the attachment part 18 in a facilitated manner.

An embodiment is also possible, in which the screw 21 is equipped with a sleeve 6 according to Fig. 1.

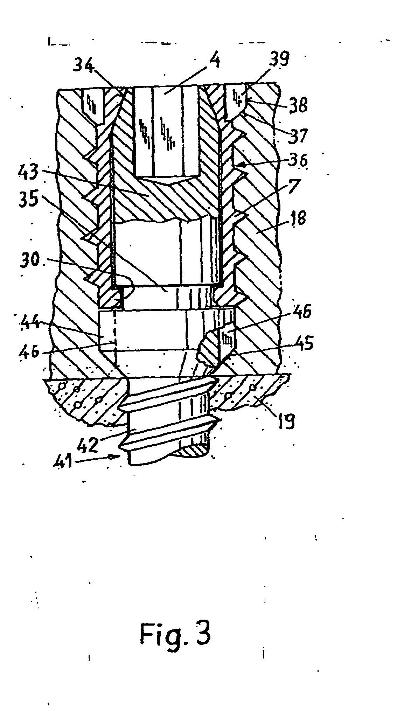

The embodiment illustrated in Figure 3 has a screw 41 with a shaft part 43, which has a radially enlarged end portion 44 (radially enlarged with respect to the outer diameter of the thread part 42 of the screw 41) bounding a groove 35, with the diameter of the end portion 44 substantially corresponding to the core diameter of the external thread 7 of the sleeve 36. The thread part 42 adjoins the end section 44 and has a smaller diameter than the end section 44. At least two first precutting edges 45 facing the thread part 42 are provided on the shaft part 43, each of which is formed at a cut-out 46 axially directed in the end portion 44. The screw 41 also consists of hardened steel. The thread part 42 is designed with a pitch, which is the same as the pitch of the external thread 7 of the sleeve 36.

In this embodiment, the screw 41, which is equipped with the sleeve 36, is screwed into a bore, which is inserted into the support part 19 through the attachment part 18. The diameter of the hole corresponds to the core diameter of the thread part 42. When the end portion 44 of the shaft part 43 strikes against the outside of the attachment part 18, the section of the bore passing through the attachment part 18 is enlarged in response to the further rotation of the screw 41 by means of the precutting edges 45 of the shaft part 43, in each case to a diameter which corresponds to the core diameter of the external thread 7 of the sleeve 36 and which thus makes it possible to screw the sleeve 36 into the attachment part 18 in a facilitated manner.

The afore-described embodiments each make it possible,, in particular without using a stud, to attain a direct, stress-free installation of the fastening device in hard materials, such as concrete, brick, steel or the like in an advantageously simple manner and to thus attain a reliable and permanent connection between the attachment part 18 and the support part 19.

The fastening device of Fig. 3 can be made by a method as follows:
First of all a blank for a screw is taken which is preferably of rod shaped (cylindrical) form, the blank is made of a hardenable material, preferably of a material hardenable to a level permitting direct thread forming action in at least one of prebored concrete, pre-bored brick and pre-bored steel.

A head portion including a tool receiving feature 4 is then formed on said blank, e.g. by a cold heading process, and the groove 35 is formed between the thread part 32; 42 and the shaft part 33; 43 or in said shaft part.

The thread is subsequently or simultaneously formed on said thread part 32; 42, e.g. by a rolling process, and the screw 31, 41 is thereafter hardened

The method comprises the further step of placing the pre-manufactured threaded sleeve 36 over said shaft part and subsequently deforming the portion 30 of said sleeve into the groove 35. This sleeve placement step can take place before or after forming a thread on said thread part 32;42 and before or after hardening of the screw 31; 41.

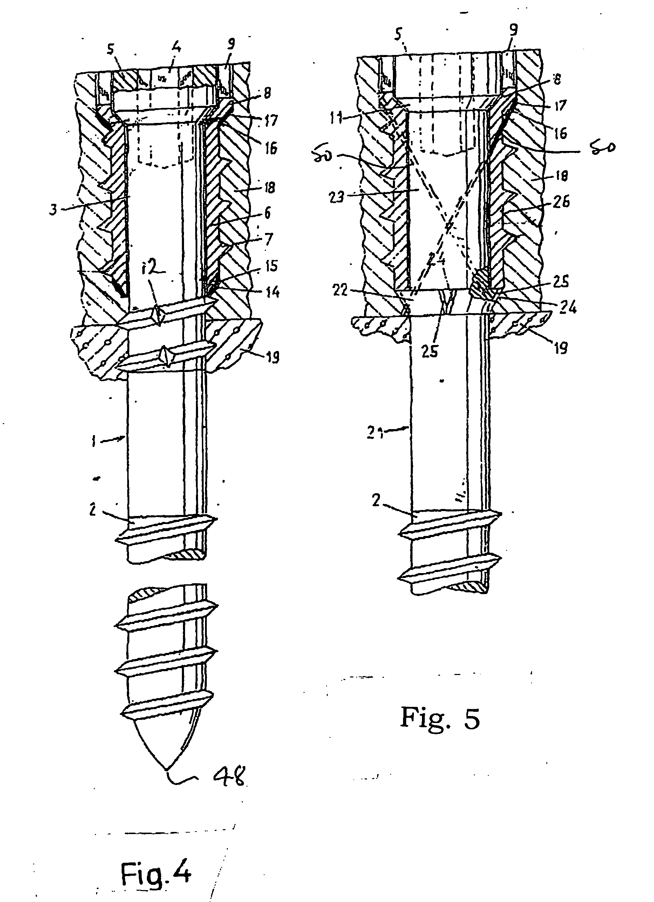

Turning now to Fig. 4 there can be seen a modified version of the fastening device of Fig. 1 in which the first and second precutting edges 14 and 16 are helically disposed rather than lying in axial planes as shown in Fig. 1. That is to say Fig. 4 shows the helical or skewed position of the first and second precutting edges 14 and 16 referred to above as an alternative in connection with Fig. 1 and also the corresponding helical or skewed position of the grooves 15 and 17 defining the precutting edges at the intersections of the respective grooves at the surface of the sleeve 6.

Fig. 5 shows a modified version of the fastening device of Fig. 2 in which the external thread 7 of said sleeve 26 has helically or axially extending grooves 50 extending over a major portion of the axial length of the sleeve between a front end thereof adjacent a tip of said thread part 2 and the enlarged rim portion thereof. Indeed the grooves 50 can essentially form axial extensions of the first precutting edges 24 and run out into second precutting edges 16. A similar arrangement of axially or helically extending grooves 50 can also be provided in the embodiment of Fig. 3.

Thus the second precutting edges 17 can be provided at a front portion of said enlarged rim of said sleeve 6; 26 and can be generally formed by extensions of the helically or axially extending grooves 50 and, optionally, the helically or axially extending grooves 50 of the thread part 7 of said sleeve 6; 26 can be aligned with and form continuations of the first precutting edges 14; 24 formed on said sleeve 6 adjacent said support section 10 or on said support section 22. The grooves 50 thus form continuous cutting edges at their intersections with the surface of the sleeve 6; 26. The grooves 50 also function to ensure the waste material cut from the installation part 18 is led away better. The grooves 50 can in particular be formed in the manner described in EP-B-0870118 of the present applicant.

More specifically the grooves or notches 50 are formed in the threads 7 of the sleeve 6: 26 and lie generally on a straight line which extends at a preferred angle of about 15° relative to the longitudinal axis of the screw 1; 21. If the precutting edges 14; 24 or 16 are inclined helically then they are also preferably inclined at the same angle. Four grooves or rows of notches are preferably provided and are uniformly distributed around the periphery of the sleeve with the same alignment at the periphery of the sleeve. If the grooves only intersect the threads 7 of the sleeve then they can be thought of as discrete notches, they can however be made deeper than the core diameter of the thread 7 and then form continuous grooves. If the grooves are designed so that discrete notches are formed then these are generally triangular and have an apex (deepest point) at the core diameter of the thread 7 with the one side surface extending radially and the other generally tangentially.

The notches also form cutting edges which in a particularly advantageous manner facilitate the entry of the sleeve 6; 26 into the attachment part.

It should be mentioned that all described fastening devices are suitable for anchorage in any massive base or material as concrete, brick, metal, in particular steel, or the like. Wood and plastic are also massive materials in that sense. The attachment part can also be made of any material, particularly of any of the materials mentioned above.

## Claims

1. A fastening device for anchorage in massive bases or materials such as concrete, brick, steel or the like, consisting of a screw (1; 21; 41) of steel, which has a thread part (2; 42), a shaft part (3; 23; 43) having a head section (5) at a free end of the shaft part, with a recess (4) formed at the head section (5) for the insertion of a tool, and consisting of a sleeve (6; 26) having an external thread (7), said sleeve having a radially enlarged rim portion (8; 38), in which means (9; 39) are formed for the placement of a second tool, the sleeve being able to be pushed onto the shaft part (3; 23; 43), being rotatable on the shaft part and being held in the axial direction in such a manner that the screw and/or the sleeve can be rotated, wherein the sleeve (6; 26; 36) can be mounted axially onto the screw blank and has in its rim portion (8) a seat, which can be placed against the head section (5) of the shaft part (3; 23; 43), wherein the shaft part (3; 23; 43) is designed with a support section (10; 22; 44), which is enlarged towards the end of the mounted sleeve (6; 26; 36) located opposite the rim portion (8) by deformation of the screw blank so as to hold the sleeve (6; 26; 36) on the shaft part (3; 23; 43);**characterized in that** the screw (1; 21; 41) is formed using a screw blank made of a steel which can be hardened; **in that** at least two scraper grooves (12) or at least two first precutting edges (24; 45) are provided at the support section (10; 22; 44) adjacent the thread part (2; 42); the scraper grooves (12) or the first precutting edges (12; 24; 45) being designed to cut a hole in an attachment part, said hole having a diameter generally corresponding to that of the core diameter of the external thread (7) of the sleeve (6; 26; 36).

2. A fastening device in accordance with claim 1, **characterized in that** said external thread (7) of said sleeve (26) has helically or axially extending grooves (50) or notches extending over a major portion of the axial length of the sleeve (26) between a front end thereof adjacent a tip of said thread part (2) and said enlarged rim portion (8) thereof.

3. A fastening device in accordance with claim 2, **characterized in that** second precutting edges (16, 17) are provided at a front portion of said enlarged rim of said sleeve (6; 26) and are generally formed by extensions of said helically or axially extending grooves (50).

4. A fastening device in accordance with claim 1, **characterized in that** at least two second precutting edges (16, 17; 37) facing the external thread (7) are provided at the rim portion (8; 38) of the sleeve (6; 26; 36) and designed to cut a hole in an attachment part to receive said enlarged rim portion of said sleeve (6; 26; 36), said hole having a diameter generally corresponding to that of said enlarged rim portion of said sleeve (6; 26; 36), said second precutting edges (16, 17; 37) preferably lying on the surface of a cone in axial planes containing the longitudinal axis of the screw (1) or being generally helically disposed on or skewed relative to the surface of said cone.

5. A method of forming a fastening device in accordance with any one of the preceding claims comprising the steps of taking a blank for a screw having a thread part (2; 42) and a shaft part (3; 23; 43) and made of a material hardenable to a level permitting direct thread forming action in at least one of prebored concrete, pre-bored brick and pre-bored steel, forming a head portion (5) including a tool receiving feature (4) at one end of said blank, said head portion being enlarged relative to a core diameter of said thread part (2; 42) to form a seat, subsequently placing a pre-manufactured threaded sleeve (6; 26) over said shaft part from a tip end of said blank, i.e. an end corresponding to the tip of the thread part (2; 42), and bringing it into position at said seat, subsequently forming a sleeve support section (10; 22) on said blank adjacent a free end of said sleeve, said sleeve support section (10; 22) having at least two scraper grooves (12) or at least two first precutting edges (24) designed to cut a hole in an attachment part, said hole having a diameter generally corresponding to that of the core diameter of the external thread (7) of the sleeve (6; 26) and subsequently or simultaneously forming a thread on said thread part (2; 42) and thereafter hardening said screw.

## Patentansprüche

1. Befestigungsvorrichtung zur Verankerung in massiven Fundamenten oder Materialien wie etwa Beton, Ziegel, Stahl oder dergleichen, die aus einer Stahlschraube (1; 21; 41) besteht, die ein Gewindeteil (2; 42), ein Schaftteil (3; 23; 43), das einen Kopfabschnitt (5) an einem freien Ende des Schaftteils aufweist, wobei eine Ausnehmung (4) an dem Kopfabschnitt (5) zum Einführen eines Werkzeugs ausgebildet ist, und die aus einer Hülse (6; 26) besteht, die ein Außengewinde (7) aufweist, wobei die Hülse einen radial vergrößerten Randabschnitt (8; 38) aufweist, in welchem Mittel (9; 39) zum Platzieren eines zweiten Werkzeugs ausgebildet sind, wobei die Hülse auf das Schaftteil (3; 23; 43) geschoben werden kann, an dem Schaftteil drehbar ist und in die axiale Richtung derart gehalten wird, dass die Schraube und/oder die Hülse gedreht werden können, wobei die Hülse (6; 26; 36) axial an dem Schraubenrohling montiert werden kann und in ihrem Randabschnitt (8) einen Sitz aufweist, der an dem Kopfabschnitt (5) des Schaftteils (3; 23; 43) platziert werden kann, wobei das Schaftteil (3; 23; 43) mit einem Stützabschnitt (10; 22; 44) entworfen ist, der zu dem Ende der montierten Hülse (6; 26; 36), das entgegengesetzt zu dem Randabschnitt (8) angeordnet ist, durch eine Deformierung des Schraubenrohlings vergrößert ist, um die Hülse (6; 26; 36) an dem Schaftteil (3; 23; 43) festzuhalten; **dadurch gekennzeichnet, dass** die Schraube (1; 21; 41) unter Verwendung eines Schraubenrohlings ausgebildet ist, der aus einem Stahl besteht, der gehärtet werden kann; dadurch, dass mindestens zwei Schabenuten (12) oder mindestens zwei erste Vorschneidekanten (24; 45) an dem Stützabschnitt (10; 22; 44) benachbart zu dem Gewindeteil (2; 42) bereitgestellt sind; wobei die Schabenuten (12) oder die ersten Vorschneidekanten (12; 24; 45) entworfen sind, um ein Loch in ein Anbauteil zu schneiden, wobei das Loch einen Durchmesser aufweist, der allgemein demjenigen des Kerndurchmessers des Außengewindes (7) der Hülse (6; 26; 36) entspricht.

2. Befestigungsvorrichtung nach Anspruch 1, **dadurch gekennzeichnet, dass** das Außengewinde (7) der Hülse (26) schraubenförmig oder axial verlaufende Nuten (50) oder Rillen aufweist, die sich über einen Hauptteil der axialen Länge der Hülse (26) hinweg zwischen einem Vorderende derselben benachbart zu einer Spitze des Gewindeteils (2) und dem vergrößerten Randabschnitt (8) derselben erstrecken.

3. Befestigungsvorrichtung nach Anspruch 2, **dadurch gekennzeichnet, dass** zweite Vorschneidekanten (16, 17) an einem Vorderabschnitt des vergrößerten Rands der Hülse (6; 26) bereitgestellt sind und allgemein durch Erweiterungen der schraubenförmig oder axial verlaufenden Nuten (50) ausgebildet sind.

4. Befestigungsvorrichtung nach Anspruch 1, **dadurch gekennzeichnet, dass** mindestens zwei zweite Vorschneidekanten (16, 17; 37), die dem Außengewinde (7) zugewandt sind, an dem Randabschnitt (8; 38) der Hülse (6; 26; 36) bereitgestellt sind und entworfen sind, um ein Loch in ein Anbauteil zu schneiden, um den vergrößerten Randabschnitt der Hülse (6; 26; 36) aufzunehmen, wobei das Loch einen Durchmesser aufweist, der allgemein demjenigen des vergrößerten Randabschnitts der Hülse (6; 26; 36) entspricht, wobei die zweiten Vorschneidekanten (16, 17; 37) vorzugsweise auf der Oberfläche eines Konus in axialen Ebenen liegen, welche die Längsachsen der Schraube (1) enthalten, oder allgemein schraubenförmig auf der Oberfläche des Konus angeordnet oder relativ zu dieser geneigt sind.

5. Verfahren zum Ausbilden einer Befestigungsvorrichtung nach einem beliebigen der vorstehenden Ansprüche, welches die Schritte umfasst, dass ein Rohling für eine Schraube verwendet wird, der ein Gewindeteil (2; 42) und ein Schaftteil (3; 23; 43) aufweist und aus einem Material besteht, das bis auf ein Niveau gehärtet werden kann, welches eine direkte Gewindeausbildungsmaßnahme in vorgebohrtem Beton, vorgebohrtem Ziegel und/oder vorgebohrtem Stahl ermöglicht, dass ein Kopfabschnitt (5), der ein Werkzeugaufnahmemerkmal (4) enthält, an einem Ende des Rohlings ausgebildet wird, wobei der Kopfabschnitt relativ zu einem Kerndurchmesser des Gewindeteils (2; 42) vergrößert ist, um einen Sitz auszubilden, dass anschließend eine vorgefertigte Gewindehülse (6; 26) von einem spitzen Ende des Rohlings aus, d.h., von einem Ende, das der Spitze des Gewindeteils (2; 42) entspricht, über dem Schaftteil platziert wird und sie an dem Sitz in Position gebracht wird, dass anschließend ein Hülsenstützabschnitt (10; 22) an dem Rohling benachbart zu einem freien Ende der Hülse ausgebildet wird, wobei der Hülsenstützabschnitt (10; 22) mindestens zwei Schabenuten (12) oder mindestens zwei erste Vorschneidekanten (24) aufweist, die entworfen sind, um ein Loch in ein Anbauteil zu schneiden, wobei das Loch einen Durchmesser aufweist, der allgemein demjenigen des Kerndurchmessers des Außengewindes (7) der Hülse (6; 26) entspricht, und dass anschließend oder gleichzeitig ein Gewinde an dem Gewindeteil (2; 42) ausgebildet wird und danach die Schraube gehärtet wird.

## Revendications

1. Dispositif de fixation pour l'ancrage dans des bases massives ou des matériaux tels que ciment, brique, acier ou similaire, constitué d'une vis (1 ; 21 ; 41) en acier, qui comporte une partie à pas de vis (2 ; 42), une partie formant tige (3 ; 23 ; 43) ayant un tronçon de tête (5) à une extrémité libre de la partie formant tige, avec un évidement (4) formé au niveau du tronçon de tête (5) pour l'insertion d'un outil, et constitué d'une douille (6 ; 26) ayant un pas de vis extérieur (7), ladite douille ayant une portion de rebord radialement élargie (8 ; 38), dans laquelle sont formés des moyens (9 ; 39) pour la mise en place d'un second outil, la douille étant capable d'être poussée sur la partie formant tige (3 ; 23 ; 43), en étant capable de rotation sur la partie formant tige et étant maintenue dans la direction axiale d'une manière telle que la vis et/ou la douille peut être mise en rotation, dans lequel la douille (6 ; 26 ; 36) peut être montée axialement sur l'ébauche de vis et comporte, dans sa portion de rebord (8), un siège qui peut être placé contre le tronçon de tête (5) de la partie formant tige (3 ; 23 ; 43), dans lequel la partie formant tige (3 ; 23 ; 43) est conçue avec un tronçon de support (10 ; 22 ; 44) qui est élargi vers l'extrémité de la douille montée (6 ; 26 ; 36) placée à l'opposé de la portion de rebord (8) par déformation de l'ébauche de vis de manière à retenir la douille (6 ; 26 ; 36) sur la partie formant tige (3 ; 23 ; 43) ;
**caractérisé en ce que** la vis (1 ; 21 ; 41) est formée en utilisant une ébauche de vis faite d'un acier qui peut être durci ; **en ce qu'**au moins deux gorges à copeaux (12) ou au moins deux premières arêtes de taille préliminaire (24 ; 45) sont prévues sur le tronçon de support (10 ; 22 ; 44) en position adjacente à la partie à pas de vis (2 ; 42) ; les gorges à copeaux (12) ou les premières arêtes de taille préliminaire (12 ; 24 ; 45) étant conçues pour tailler un trou dans une partie d'attache, ledit trou ayant un diamètre correspondant généralement à celui du diamètre central du pas de vis extérieur (7) de la douille (6 ; 26 ; 36).

2. Dispositif de fixation selon la revendication 1, **caractérisé en ce que** ledit pas de vis extérieur (7) de ladite douille (26) comporte des gorges (50) s'étendant en hélice ou s'étendant axialement, ou des encoches qui s'étendent sur une majeure portion de la longueur axiale de la douille (26) entre une extrémité avant de celle-ci adjacente à une pointe de ladite partie à pas de vis (2) et ladite portion de rebord élargie (8) de celle-ci.

3. Dispositif de fixation selon la revendication 2, **caractérisé en ce que** des secondes arêtes de taille préliminaire (16, 17) sont prévues au niveau d'une portion avant dudit rebord élargi de ladite douille (6 ; 26) et sont généralement formées par des extensions desdites gorges (50) s'étendant en hélice ou s'étendant axialement.

4. Dispositif de fixation selon la revendication 1, **caractérisé en ce qu'**il est prévu au moins deux secondes arêtes de taille préliminaire (16, 17 ; 37) en face du pas de vis extérieur (7) au niveau de la portion de rebord (8 ; 38) de la douille (6 ; 26 ; 36) et conçues pour tailler un trou dans une partie d'attache afin de recevoir ladite portion de rebord élargie de ladite douille (6 ; 26 ; 36), ledit trou ayant un diamètre correspondant généralement à celui de ladite portion de rebord élargie de ladite douille (6 ; 26 ; 36), lesdites secondes arêtes de taille préliminaire (16, 17 ; 37) reposant de préférence sur la surface d'un cône dans des plans axiaux contenant l'axe longitudinal de la vis (1), ou étant disposées généralement en hélice sur la surface dudit cône, ou en biais par rapport à ladite surface.

5. Procédé pour former un dispositif de fixation selon l'une quelconque des revendications précédentes, comprenant les étapes consistant à prendre une ébauche pour une vis ayant une partie à pas de vis (2 ; 42) et une partie formant tige (3 ; 23 ; 43) et réalisée en un matériau durcissable à un niveau permettant une action directe de formation de pas de vis dans au moins un matériau comme ciment prépercé, brique prépercée, et acier prépercé, à former une portion de tête (5) incluant une caractéristique de réception d'outil (4) à une extrémité de ladite ébauche, ladite portion de tête étant élargie par rapport à un diamètre central de ladite partie à pas de vis (2 ; 42) pour former un siège, à placer ultérieurement une douille préfabriquée avec pas de vis (6 ; 26) par-dessus ladite partie formant tige depuis une extrémité de pointe de ladite ébauche, c'est-à-dire une extrémité correspondant à la pointe de la partie à pas de vis (2 ; 42), et à l'amener en position sur ledit siège, à former ultérieurement un tronçon de support de douille (10 ; 22) sur ladite ébauche, en position adjacente à une extrémité libre de ladite douille, ledit tronçon de support de douille (10 ; 22) ayant au moins deux gorges à copeaux (12) ou au moins deux premières arêtes de taille préliminaire (24) conçues pour tailler un trou dans une partie d'attache, ledit trou ayant un diamètre correspondant généralement à celui du diamètre central du pas de vis extérieur (7) de la douille (6 ; 26), et à former ultérieurement ou simultanément un pas de vis sur ladite partie à pas de vis (2 ; 42), et à faire ensuite durcir ladite vis.
